# EUROPEAN PATENT APPLICATION

(11) **EP 3 998 189 A1**
(43) Date of publication of application: **18.05.2022**
(21) Application number: 20837703.6
(22) Date of filing: 03.07.2020
(51) Int. Cl.: B63J 99/00, B63H 5/08, B63H 21/14, B63H 21/17, B63H 21/20, B63H 21/21, B63H 23/30

(54) **PROPULSION SYSTEM**

(30) Priority: 08.07.2019 JP 2019126834
(71) Applicant: Yanmar Power Technology Co., Ltd., Osaka-shi Osaka 530-0013 (JP)
(72) Inventor: SAWANO, Tomohiro, Osaka-shi, Osaka 530-8311 (JP); HONJO, Toru, Osaka-shi, Osaka 530-8311 (JP); KUROIWA, Yuya, Osaka-shi, Osaka 530-8311 (JP); YAMAGAMI, Masato, Osaka-shi, Osaka 530-8311 (JP)
(74) Representative: Vigand, Philippe
(86) International application number: PCT/JP2020/026281
(87) International publication number: WO 2021/006223

(57) **Abstract**

This propulsion system (2) is provided with at least a first propeller (10a) and a second propeller (10b). The propulsion system (2) is provided with: a first engine (3a) provided so as to be capable of directly driving the first propeller (10a); a second engine (3b) provided so as to be capable of directly driving the second propeller (10b); a first electric motor (4a) provided between the first engine (3a) and the first propeller (10a); and a second electric motor (4b) provided between the second engine (3b) and the second propeller (10b). When the first engine (3a) is stopped, the first propeller (10a) is driven by the first electric motor (4a) that rotates by power generated by the second electric motor (4b).

## Description

### TECHNICAL FIELD

The present invention relates to a propulsion system mounted in a ship including a plurality of propellers.

### BACKGROUND ART

Conventionally, a ship including two propulsion devices (for example, propellers) has been known. Patent Literature 1 discloses an electric propulsion system for this type of ship.

The electric propulsion system of Patent Literature 1 includes a propulsion electric motor and a power supply device. The propulsion electric motor drives propellers. The power supply device that supplies electric power to the propulsion electric motor includes a plurality of generators driven by a plurality of engines.

### CITATION LIST

### Patent Literature

Patent Literature 1: Japanese Unexamined Patent Application Publication No. 2015-071420

### DISCLOSURE OF INVENTION

### PROBLEMS TO BE SOLVED BY THE INVENTION

In a ship including a plurality of propellers and a power source for each of the propellers as in Patent Literature 1 described above, improvement of fuel efficiency, in particular, during low-speed navigation has been desired. Additionally, when any of the engines breaks down, the ship is navigated by power of the remaining engine, and there has been a demand for improvement, for example, in maintaining the ship's straight traveling performance in this case.

The present invention is made in view of the above circumstances, and its object is to provide a propulsion system that, in a ship equipped with a plurality of propulsion devices, can stop an engine corresponding to a part of the plurality of propulsion devices while maintaining straight navigation performance and that can reduce fuel consumption during low-speed navigation or the like.

### MEANS FOR SOLVING THE PROBLEMS

### EFFECT OF THE INVENTION

The problem to be solved by the present invention is as described above, and the means for solving the problem and effects thereof will be next described.

According to an aspect of the present invention, a propulsion system configured as below is provided. In other words, the propulsion system is mounted in a ship including at least a first propulsion device and a second propulsion device. The propulsion system includes a first engine, a second engine, a first electric motor, and a second electric motor. The first engine is provided to directly drive the first propulsion device. The second engine is provided to directly drive the second propulsion device. The first electric motor is provided between the first engine and the first propulsion device. The second electric motor is provided between the second engine and the second propulsion device. When the first engine is stopped, the first propulsion device is driven by the first electric motor rotating with electric power generated by the second electric motor.

This allows the single engine to provide power directly or indirectly to each of a plurality of propellers, and thus fuel consumption during low-speed navigation can be reduced and straight traveling performance can be maintained at the time of breaking down of a part of the engines.

The propulsion system is preferably configured as below. In other words, the propulsion system includes a first power transmission path, a second power transmission path, a first clutch, a second clutch, a third clutch, a fourth clutch, and a controller. The first power transmission path connects the first engine and the first propulsion device and is provided with the first electric motor in the middle. The second power transmission path connects the second engine and the second propulsion device and is provided with the second electric motor in the middle. The first clutch switches between a first state in which the first power transmission path between the first engine and the first electric motor is connected and a second state in which the first power transmission path is disconnected. The second clutch switches between a first state in which the first power transmission path between the first electric motor and the first propulsion device is connected and a second state in which the first power transmission path is disconnected. The third clutch switches between a first state in which the second power transmission path between the second engine and the second electric motor is connected and a second state in which the second power transmission path is disconnected. The fourth clutch switches between a first state in which the second power transmission path between the second electric motor and the second propulsion device is connected and a second state in which the second power transmission path is disconnected. The controller controls switching between the first state and the second state in each of the first clutch, the second clutch, the third clutch, and the fourth clutch. The first electric motor and the second electric motor are electrically connected to each other such that electric power generated by rotation of either one thereof can be supplied to the other. When the first engine is stopped, the controller switches the first clutch to the second state and switches the second clutch, the third clutch, and the fourth clutch to the first state. The first propulsion device is driven by the first electric motor rotating with electric power that is generated by the second electric motor with power from the second engine. The second propulsion device is driven by the power from the second engine.

As a result, the single engine can be stopped while straight navigation performance is maintained, and fuel consumption during low-speed navigation or the like can be reduced. In addition, even when one of the engines breaks down, power of the remaining engine can be distributed to the plurality of propulsion devices to drive the propulsion devices, and thus the straight travelling performance of the ship can be favorably maintained.

In the propulsion system, wherein each of the first electric motor and the second electric motor is preferably connected to an identical electrical storage device.

As a result, power generated by the first electric motor or the second electric motor can be stored in the electrical storage device, and the first electric motor and/or the second electric motor can be driven by the power stored by the electrical storage device.

The propulsion system is preferably configured as below. In other words, when a navigation speed of the ship is a predetermined speed or lower, the controller stops any of the first engine and the second engine. The first propulsion device or the second propulsion device corresponding to the stopped first engine or the stopped second engine is driven by power, converted by the first electric motor and the second electric motor, of the second engine or the first engine that is not stopped.

As a result, a part of the engines can be stopped at low-speed navigation, and thus fuel efficiency of the engine in operation can be improved and fuel consumption can be reduced.

In the propulsion system, the controller preferably determines whether to stop an operation of the first engine or the second engine based on at least one of a load and a rotation speed of any of the first engine and the second engine and the first electric motor and the second electric motor.

As a result, the number of engines to be operated can be appropriately determined in accordance with an operating state of the engine or the electric motor.

In the propulsion system, the controller preferably determines whether to stop an operation of the first engine or the second engine based on at least one of a load and a rotation speed of each of the first engine and the second engine and each of the first electric motor and the second electric motor.

As a result, the number of engines to be operated can be more appropriately determined in accordance with an operating state of the engine or the electric motor.

The propulsion system preferably includes an error detection unit that detects errors of the first engine and the second engine.

As a result, when an error occurs in the engine, the engine can be automatically stopped.

In the propulsion system, the error detection unit preferably detects at least one of engine oil pressure, a rotation speed, and an engine temperature of the first engine and the second engine.

As a result, an error of the engine can be easily detected.

### BRIEF DESCRIPTION OF DRAWINGS

FIG. 1 is a perspective view illustrating an example of a ship in which a propulsion system according to a first embodiment of the present invention is mounted.
FIG. 2 is a schematic diagram illustrating a configuration of the propulsion system of the first embodiment.
FIG. 3 is a block diagram illustrating the configuration of the propulsion system of the first embodiment.
FIG. 4 is a schematic diagram illustrating a configuration of a propulsion system of a second embodiment of the present invention.
FIG. 5 is a schematic diagram illustrating a configuration of a propulsion system of a third embodiment of the present invention.

### DESCRIPTION OF EMBODIMENTS

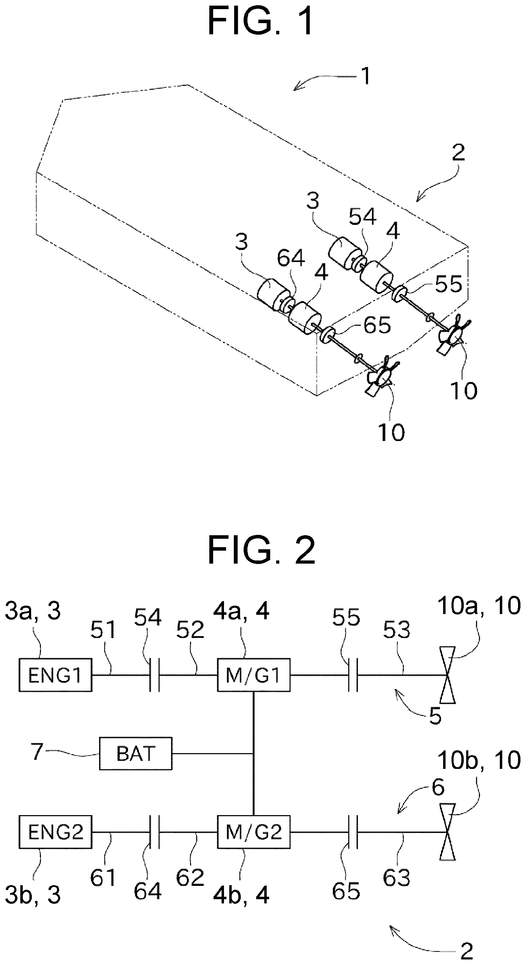

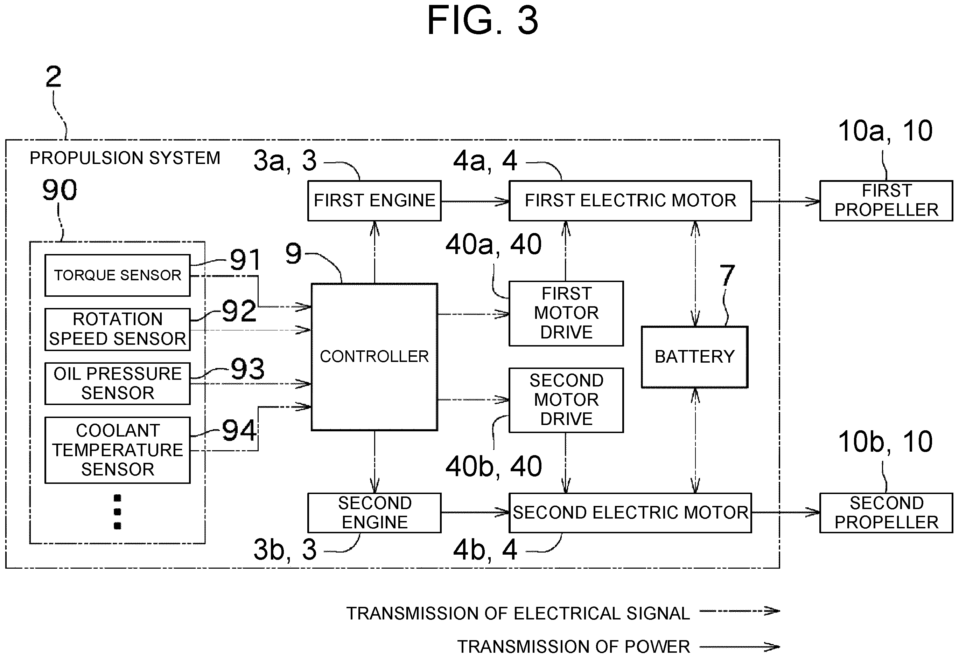

Next, embodiments of the present invention will be described with reference to the drawings. FIG. 1 is a perspective view illustrating an example of a ship 1 in which a propulsion system 2 according to a first embodiment of the present invention is mounted. FIG. 2 is a schematic diagram illustrating a configuration of the propulsion system 2 of the first embodiment. FIG. 3 is a block diagram illustrating the configuration of the propulsion system 2 of the first embodiment.

The ship 1 illustrated in FIG. 1 is configured as a ship including two propellers (propulsion devices) 10 and employing a two-shaft propulsion system. However, the ship is not limited to such a configuration and may employ a three or more shaft propulsion system which includes three or more propellers.

Each of the propellers 10 includes a plurality of blades and is fixed to a propeller shaft (not illustrated). The propeller 10 converts drive force transmitted from an engine 3 and/or an electric motor 4 described below via the propeller shaft into propulsive force in the direction of a rotation axis.

As illustrated in FIG. 2, the propulsion system 2 of the present embodiment mounted in the ship 1 is configured as a hybrid propulsion system including two types of drive sources (that is, the engine 3 and the electric motor 4) for driving the propellers 10.

The propulsion system 2 is provided with a set of a drive source set of the engine 3 and the electric motor 4 for each of the propellers 10. In other words, the propulsion system 2 is provided with drive source sets corresponding to the number of propellers 10 included in the ship 1 in which the propulsion system 2 is mounted.

FIG. 2 illustrates, as an example, the propulsion system 2 provided with two drive source sets in accordance with the number of propellers 10 included in the ship 1.

In the following description, to identify each of the propeller 10, the engine 3, and the electric motor 4, the propeller 10, the engine 3, and the electric motor 4 that are illustrated on the upper side in FIG. 2 may be referred to as a first propeller (first propulsion device) 10a, a first engine 3a, and a first electric motor 4a. Also, the propeller 10, the engine 3, and the electric motor 4 that are illustrated on the lower side in FIG. 2 may be referred to as a second propeller (second propulsion device) 10b, a second engine 3b, and a second electric motor 4b.

The engine 3 is formed of a known diesel engine for a ship and functions as a main engine that provides power to the ship 1. Although the details are not illustrated, combustion chambers are formed in the engine 3 that are divided by cylinders, pistons, and the like. In each of the combustion chambers, air supplied via a turbocharger (not illustrated) is compressed, and fuel is injected via an injector (not illustrated) into the compressed air that has become high temperature, and thus the fuel spontaneously ignites and burns to push the piston into motion.

The first engine 3a is provided to directly drive the first propeller 10a. As illustrated in FIG. 2, power generated by the first engine 3a is transmitted through a first power transmission path 5 to the first propeller 10a.

The first power transmission path 5 includes a first transmission shaft 51, a second transmission shaft 52, and a third transmission shaft 53 that are provided in the order from a side far from the first propeller 10a. The first power transmission path 5 further includes a first clutch 54 and a second clutch 55 that switch transmission/disconnection of power in the first power transmission path 5.

The first transmission shaft 51 may be configured as an output shaft of the first engine 3a or may be configured as a shaft connected to the output shaft of the first engine 3a. The third transmission shaft 53 may be configured as a propeller shaft to which the first propeller is fixed or may be configured as a shaft connected to the propeller shaft.

The first clutch 54 is configured, for example, as a known hydraulic clutch and is provided between the first transmission shaft 51 and the second transmission shaft 52. The first clutch 54 is configured to be switchable between a transmitted state (first state) in which power from the first transmission shaft 51 is transmitted to the second transmission shaft 52 and a disconnected state (second state) in which power from the first transmission shaft 51 is disconnected to the second transmission shaft 52.

The second clutch 55 is configured as a known hydraulic clutch in the same way as the first clutch 54 and is provided between the second transmission shaft 52 and the third transmission shaft 53. The second clutch 55 is configured to be switchable between a transmitted state (first state) in which power from the second transmission shaft 52 is transmitted to the third transmission shaft 53 and a disconnected state (second state) in which power from the second transmission shaft 52 is disconnected to the third transmission shaft 53.

The second engine 3b is provided to directly drive the second propeller 10b. As illustrated in FIG. 2, power generated in the second engine 3b is transmitted through a second power transmission path 6 to the second propeller 10b.

The second power transmission path 6 includes a fourth transmission shaft 61, a fifth transmission shaft 62, and a sixth transmission shaft 63 that are provided in the order from a side far from the second propeller 10b. The second power transmission path 6 further includes a third clutch 64 and a fourth clutch 65 that switch transmission/disconnection of power in the second power transmission path 6.

The fourth transmission shaft 61 may be configured as an output shaft of the second engine 3b or may be configured as a shaft connected to the output shaft of the second engine 3b. The sixth transmission shaft 63 may be configured as a propeller shaft to which the second propeller 10b is fixed or may be configured as a shaft connected to the propeller shaft.

Since the configuration of the third clutch 64 and the fourth clutch 65 is substantially the same as that of the first clutch 54 and the second clutch 55, the description is omitted.

Each of the electric motors 4 functions as a motor generator that is utilized as an electric motor and a generator. In other words, the electric motor 4 can not only function as a sub-engine that provides power to the ship 1 but also generate electricity with power from the engine 3. When functioning as an electric motor, the electric motor 4 is controlled, for example, by a motor driver 40 illustrated in FIG. 3.

In the following description, in order to identify the motor drivers 40 that drives each of the electric motors 4, the motor driver 40 that controls the first electric motor 4a may be referred to as a first motor driver 40a, and the motor driver 40 that controls the second electric motor 4b may be referred to as a second motor driver 40b.

The motor driver 40 includes an inverter, and controls the magnitude, direction, timing, and the like of current flowing through the electric motor 4 and controls the direction of rotation, the number of rotations, and the like of the electric motor 4. The motor driver 40 is electrically connected to a controller 9 described below, and controls the operation of the electric motor 4 in accordance with control commands from the controller 9.

The first electric motor 4a is provided in the middle of the first power transmission path 5 (specifically, the second transmission shaft 52). Although not illustrated, the first electric motor 4a includes, for example, its rotation shaft connected to the second transmission shaft 52 via a clutch for a motor (not illustrated).

In other words, in accordance with a state (transmitted state/disconnected state) of the clutch for the motor, which connects the rotation shaft of the first electric motor 4a and the second transmission shaft 52, the first electric motor 4a is provided to be switchable between an operating state in which power can be transmitted between the rotation shaft thereof and the second transmission shaft 52 and a stopped state in which power transmission between the rotation shaft thereof and the second transmission shaft 52 is disconnected.

Incidentally, the above operating state includes a driving state and a power generating state. In the driving state, the first electric motor 4a functions as an electric motor, and the power from the first electric motor 4a is transmitted via the rotation shaft and the above clutch for the motor to the second transmission shaft 52 to torque assist the first engine 3a. In the power generating state, the first electric motor 4a functions as a generator, and the power from the second transmission shaft 52 is transmitted via the above clutch for the motor to the rotation shaft of the first electric motor 4a, and electricity is generated by rotation of the rotation shaft.

The stopped state described above indicates a state in which power transmission between the rotation shaft of the first electric motor 4a and the second transmission shaft 52 is not performed depending on a state of the above clutch for the motor regardless of whether the first electric motor 4a is operating. In other words, in the stopped state, the first electric motor 4a may be stopped or may be operated. Note that from the viewpoint of energy saving, it is preferable to stop the first electric motor 4a in the stopped state.

The second electric motor 4b is provided in the middle of the second power transmission path 6 (specifically, the fifth transmission shaft 62). Although not illustrated, the second electric motor 4b includes, for example, its rotation shaft connected to the fifth transmission shaft 62 via a clutch for a motor (not illustrated).

In other words, in accordance with a state of the clutch for the motor, which connects the rotation shaft of the second electric motor 4b and the fifth transmission shaft 62, the second electric motor 4b is provided to be switchable between an operating state in which power can be transmitted between the rotation shaft thereof and the fifth transmission shaft 62 and a stopped state in which power transmission between the rotation shaft thereof and the fifth transmission shaft 62 is disconnected. Since the operating state and the stopped state of the second electric motor 4b are the same as those of the first electric motor 4a, the detailed description is omitted.

It is preferable to provide reduction gears (not illustrated) in the first power transmission path 5 and the second power transmission path 6 that are on the downstream of the electric motors 4. In this configuration, the power from the engine 3 and/or the electric motor 4 is reduced by the reduction gear and is thereafter supplied to the propeller 10.

As illustrated in FIG. 2, the first electric motor 4a and the second electric motor 4b are electrically connected to each other. In other words, the first electric motor 4a is rotatably driven by electric power generated by the second electric motor 4b. The second electric motor 4b is rotatably driven by electric power generated by the first electric motor 4a.

As illustrated in FIG. 2, the propulsion system 2 of the present embodiment includes a battery (electrical storage device) 7 that is electrically connected to both the first electric motor 4a and the second electric motor 4b.

In a case where the first electric motor 4a and/or the second electric motor 4b function as an electric motor, the battery 7 supplies electric power to the first electric motor 4a and/or the second electric motor 4b. In a case where the first electric motor 4a and/or the second electric motor 4b function as a generator, the electric power generated by the first electric motor 4a and/or the second electric motor 4b is supplied for charging in the battery 7.

Also, as illustrated in FIG. 3, the propulsion system 2 of the present embodiment includes the controller 9 that controls the engine 3, the electric motor 4, and an operation (state switching) of each of the aforementioned clutches.

The controller 9 is configured, for example, as an engine control unit (ECU) that controls an operation of the engine 3. The controller 9 is a computer provided with a CPU, a ROM, a RAM, an HDD, and the like. The ROM stores a program for controlling the engine 3 and the motor driver 40 (in other words, the electric motor 4), various pre-set thresholds, and the like.

The propulsion system 2 of the present embodiment includes an engine state detection unit 90 formed of various sensors that detect information on the operating state of the engine 3. The controller 9 controls the operation of the engine 3 and the electric motor 4 based on various detection values detected by the engine state detection unit 90.

The engine state detection unit 90 includes, for example, a torque sensor 91, a rotation speed sensor 92, an oil pressure sensor 93, a coolant temperature sensor 94, and the like.

The torque sensor 91 uses, for example, a flange-type sensor that uses a strain gauge to detect torque, and the torque sensor 91 detects torque (load) of the engine 3. However, the torque sensor 91 is not limited to such a sensor, and can also use a magnetostrictive, piezoelectric, optical, spring, capacitive, or another type of sensor.

The rotation speed sensor 92 is configured, for example, as a crank angle sensor that detects rotation of a crankshaft (not illustrated) included in the engine 3, and the rotation speed sensor 92 detects a rotation speed of the engine 3.

The oil pressure sensor 93 is provided, for example, at an appropriate position in an oil circulation path (not illustrated) through which engine oil for lubricating the engine 3 passes, and the oil pressure sensor 93 detects engine oil pressure of the engine 3.

The coolant temperature sensor 94 is provided, for example, at an appropriate position in a coolant circulation path (not illustrated) through which coolant that cools a body of the engine 3 flows, and the coolant temperature sensor 94 detects a coolant temperature of the engine 3.

The controller 9 can, for example, determine whether the temperature (engine temperature) of the body of the engine 3 is normal (whether the engine 3 has overheated) based on the coolant temperature detected by the coolant temperature sensor 94. In other words, the controller 9 can monitor the engine temperature via the coolant temperature sensor 94. When an error occurs in engine temperature, the controller 9 can detect the error.

In addition, the controller 9 is not limited to such a configuration, and may, for example, use an engine oil temperature, an intake air temperature in an intake manifold, and an exhaust air temperature in an exhaust manifold and thereby determine whether the temperature of the body of the engine 3 is normal.

Moreover, the controller 9 can determine, based on various detection values (for example, engine oil pressure, a rotation speed, a coolant temperature, and the like) detected by the engine state detection unit 90, whether an error has occurred in the engine 3. In other words, the engine state detection unit 90 also functions as an error detection unit for the engine 3.

Next, a plurality of drive modes that the propulsion system 2 of the present embodiment includes will be described. The drive modes include an electric propulsion mode, an engine propulsion mode, a propulsion charging mode, a hybrid propulsion mode, and a fuel-efficient propulsion mode.

In addition, since the engine propulsion mode, the propulsion charging mode, and the hybrid propulsion mode are conventionally known, these modes are briefly described here.

In the engine propulsion mode, the two engines 3 are both brought into operation and the two electric motors 4 are stopped. The controller 9 allows all of the first clutch 54, the second clutch 55, the third clutch 64, and the fourth clutch 65 to switch to a transmitted state and allows the clutch for the motor to switch to a disconnected state. As a result, the propeller 10 is driven into rotation directly by power from the corresponding engine 3.

In the propulsion charging mode, the two engines 3 are both brought into operation and the two electric motors 4 function as generators. The controller 9 allows all of the first clutch 54, the second clutch 55, the third clutch 64, the fourth clutch 65, and the clutch for the motor to switch to a transmitted state.

As a result, the propeller 10 is driven into rotation directly by power from the corresponding engine 3, and a part of the power from the engine 3 is transmitted through the clutch for the motor or the like to the electric motor 4, therefore allowing the electric motor 4 to generate electricity. The electric power generated by the electric motor 4 is supplied to the battery 7 for charging the battery 7.

Additionally, in the propulsion charging mode, at least one of the two electric motors 4 can function as a generator. In this case, it is preferable that the electric motor 4 not functioning as a generator is stopped and that the corresponding clutch for the motor is switched to a disconnected state.

In the hybrid propulsion mode, the two engines 3 are both brought into operation and the two electric motors 4 function as electric motors. The controller 9 allows all of the first clutch 54, the second clutch 55, the third clutch 64, the fourth clutch 65, and the clutch for the motor to switch to a transmitted state.

As a result, the rotation shaft of the electric motor 4 is rotated by electric power from the battery 7, and thus the electric motor 4 torque assists the engine 3 (the second transmission shaft 52 and the fifth transmission shaft 62). In other words, the propeller 10 is rotatably driven by power from the engine 3 and the electric motor 4.

Next, the fuel-efficient propulsion mode of the propulsion system 2 of the present embodiment will be described in detail with reference to FIG. 2 and the like. The fuel-efficient propulsion mode is performed, for example, during low-speed navigation such as trolling of the ship 1 or under low load.

Specifically, the controller 9 determines whether the ship 1 is currently navigated at a low speed with a navigation speed of the ship 1, which is detected by a navigation speed detection unit (not illustrated) mounted in the ship 1.

The navigation speed detection unit is formed, for example, of an electromagnetic, acoustic, or another type of ship speed meter and detects a navigation speed (for example, a speed through the water) of the ship 1. The navigation speed detection unit is provided so as to transmit the detected navigation speed to the controller 9.

When the navigation speed detected by the navigation speed detection unit is higher than a predetermined speed, the controller 9 determines that the ship 1 is navigated at a high speed. When the detected navigation speed is the predetermined speed or lower, the controller 9 determines that the ship 1 is navigated at a low speed.

When having determined that the ship 1 is navigated at a low speed, the controller 9 switches to the fuel-efficient propulsion mode to propel the ship 1. In this case, the controller 9 may determine the number of engines 3 to be stopped, for example, based on the navigation speed of the ship 1.

Additionally, the controller 9 can also determine, for example, based on a load of the engine 3, which is detected by the torque sensor 91, whether to stop a part of the engines 3 and switch to the fuel-efficient propulsion mode.

When the load of the engine 3 is larger than a predetermined load set in advance, the engine 3 is not stopped, that is, the drive mode is not switched to the fuel-efficient propulsion mode. When the load of the engine 3 is the predetermined load or smaller, the controller 9 determines the engine 3 to be stopped and the number of engines 3 to be stopped, etc., for the other engine 3 so that at least one engine 3 of the plurality of engines 3 is operated. The number of engines 3 to be stopped can be determined, for example, based on the detected load of the engine 3.

In the fuel-efficient propulsion mode, the controller 9 stops the other engine 3 so that the equipped engines 3 are alternately operated. For example, every time the fuel-efficient propulsion mode is executed, the engine 3 to be stopped is changed alternately in order. Consequently, the operating time of each of the engines 3 can be prevented from being biased, which makes it easy to match the timing of maintenance based on the operating time.

In addition, without being limited such a configuration, the controller 9 may determine whether to switch to the fuel-efficient propulsion mode based on the rotation speed of the engine 3 instead of the load of the engine 3 or in addition to the load.

Further, when the propulsion system 2 allows the ship 1 to be propelled in the hybrid propulsion mode, the controller 9 may determine whether to switch to the fuel-efficient propulsion mode based on the load and/or the rotation speed of the electric motor 4 instead of the load and/or the rotation speed of the engine 3. Alternatively, the controller 9 may determine whether to switch to the fuel-efficient propulsion mode based on the load and/or the rotation speed of both the engine 3 and the electric motor 4.

As a result, when the ship 1 is navigated at a low speed and the load of the engines 3 is low, a reduction in fuel consumption can be achieved by stopping a part of the engines 3. Furthermore, since the plurality of propellers 10 is driven by the engine 3 in operation, fuel efficiency of the engine 3 in operation can be improved by increasing the load per engine.

In addition, by stopping the engine 3, the operating time of the engine 3 can be shortened, and the maintenance cycle based on the operating time can be extended.

As described above, when the ship 1 is navigated at a low speed or when the load and/or the rotation speed of the engine 3 and/or the electric motor 4 are a predetermined threshold or smaller, the controller 9 determines that the fuel-efficient propulsion mode needs to be executed, switches to the fuel-efficient propulsion mode, and stops, for example, the operation of the first engine 3a illustrated in FIG. 2.

In this case, the controller 9 switches the first clutch 54 to a disconnected state and switches the second clutch 55, the third clutch 64, the fourth clutch 65, and the two clutches for the motors corresponding to the respective electric motors 4 to a transmitted state.

The first electric motor 4a is rotatably driven by electric power from the battery 7, and the generated power is transmitted via the third transmission shaft 53 and the like to the first propeller 10a, and thus the first propeller 10a is rotatably driven.

The second electric motor 4b functions as a generator and converts power from the second engine 3b into electric power and supplies the electric power to charge the battery 7.

In addition, without being limited to such a configuration, for example, in the second electric motor 4b, the electric power converted with the power from the second engine 3b may be directly supplied to rotate the first electric motor 4a, or may be supplied both to rotate the first electric motor 4a and to charge the battery 7.

As just described, at least one engine 3 (for example, the second engine 3b) is operated as a main power source, and the other propeller 10 (for example, the first propeller 10a) that is not directly driven by the engine 3 can be rotatably driven by the electric power from the battery 7 or the electric power converted from the power of the second engine 3b.

As a result, the single engine 3 can provide power to the two propellers 10 and straight traveling performance of the ship 1 can be maintained. In addition, a part of the engines 3 can be stopped, and fuel consumption can be reduced and also the fuel efficiency of the engine 3 in operation can be improved.

Moreover, in the propulsion system 2 of the present embodiment, when an error is detected in any of the engines 3 by the aforementioned engine state detection unit 90, the engine 3 is stopped, and similarly as in the case of the aforementioned low-speed navigation, the propeller 10 that is directly driven by the stopped engine 3 is rotatably driven by the electric power converted from the battery 7 or the power of the other engine 3 in operation. In other words, even when a part of the engines 3 breaks down, the ship 1 can be propelled while maintaining the straight travelling performance.

The controller 9 can detect the error in the engine 3 based on various detection values detected from the engine state detection unit 90. For example, the controller 9 may determine whether the detected values reflecting engine oil pressure, an engine temperature, and a rotation speed are out of the pre-set normal threshold range.

As described above, the propulsion system 2 of the present embodiment is mounted in the ship 1 including at least the first propeller 10a and the second propeller 10b. The propulsion system 2 includes the first engine 3a, the second engine 3b, the first electric motor 4a, and the second electric motor 4b. The first engine 3a is provided so as to directly drive the first propeller 10a. The second engine 3b is provided so as to directly drive the second propeller 10b. The first electric motor 4a is provided between the first engine 3a and the first propeller 10a. The second electric motor 4b is provided between the second engine 3b and the second propeller 10b. When the first engine 3a is stopped, the first propeller 10a is driven by the first electric motor 4a rotating with electric power generated by the second electric motor 4b.

This allows the single engine 3 to provide power directly or indirectly to each of the plurality of propellers 10, and thus fuel consumption during low-speed navigation can be reduced and straight traveling performance can be maintained at the time of breaking down of a part of the engines 3.

In addition, the propulsion system 2 of the present embodiment includes the first power transmission path 5, the second power transmission path 6, the first clutch 54, the second clutch 55, the third clutch 64, the fourth clutch 65, and the controller 9. The first power transmission path 5 connects the first engine 3a and the first propeller 10a, and the first electric motor 4a is provided in the middle of the first power transmission path 5. The second power transmission path 6 connects the second engine 3b and the second propeller 10b, and the second electric motor 4b is provided in the middle of the second power transmission path 6. The first clutch 54 switches between a transmitted state in which the first power transmission path 5 between the first engine 3a and the first electric motor 4a is connected and a disconnected state in which the first power transmission path 5 is disconnected. The second clutch 55 switches between a transmitted state in which the first power transmission path 5 between the first electric motor 4a and the first propeller 10a is connected and a disconnected state in which the first power transmission path 5 is disconnected. The third clutch 64 switches between a transmitted state in which the second power transmission path 6 between the second engine 3b and the second electric motor 4b is connected and a disconnected state in which the second power transmission path 6 is disconnected. The fourth clutch 65 switches between a transmitted state in which the second power transmission path 6 between the second electric motor 4b and the second propeller 10b is connected and a disconnected state in which the second power transmission path 6 is disconnected. The controller 9 controls switching of a transmitted state and a disconnected state in each of the first clutch 54, the second clutch 55, the third clutch 64, and the fourth clutch 65. The first electric motor 4a and the second electric motor 4b are electrically connected to each other so that the electric power generated by rotation of either one thereof can be supplied to the other. When the first engine 3a is stopped, the controller 9 switches the first clutch 54 to a disconnected state and switches the second clutch 55, the third clutch 64, and the fourth clutch 65 to a transmitted state. The first propeller 10a is driven by the first electric motor 4a rotating with electric power generated by the second electric motor 4b with power from the second engine 3b. The second propeller 10b is driven by the power from the second engine 3b.

Accordingly, even under a low load, the drive force of the single engine 3 is substantially distributed to the plurality of propellers 10, and thus compared with a case where all of the engines 3 are driven, the high efficiency area of the engine 3 is easily utilized, and fuel consumption can be reduced. In addition, even when one of the engines 3 breaks down, the plurality of propellers 10 can be driven simultaneously by the remaining engine 3, and thus the straight travelling performance of the ship 1 can be favorably maintained.

Further, in the propulsion system 2 of the present embodiment, each of the first electric motor 4a and the second electric motor 4b is connected to the same battery 7.

As a result, the power generated by the first electric motor 4a or the second electric motor 4b can be stored in the battery 7, and the first electric motor 4a and/or the second electric motor 4b can be driven by the power stored by the battery 7.

Furthermore, in the propulsion system 2 of the present embodiment, when the navigation speed of the ship 1 is a predetermined speed or lower, the controller 9 stops any of the first engine 3a and the second engine 3b. The first propeller 10a or the second propeller 10b corresponding to the stopped first engine 3a or the stopped second engine 3b is driven by power, which is converted by the first electric motor 4a and the second electric motor 4b, of the second engine 3b or the first engine 3a that is not stopped.

As a result, a part of the engines 3 can be stopped at low-speed navigation, and thus the fuel efficiency of the engine 3 in operation can be improved and fuel consumption can be reduced.

Additionally, in the propulsion system 2 of the present embodiment, the controller 9 determines whether to stop the operation of the first engine 3a or the second engine 3b based on at least one of the load and the rotation speed of any of the first engine 3a and the second engine 3b and the first electric motor 4a and the second electric motor 4b.

As a result, the number of engines 3 to be operated can be appropriately determined in accordance with an operating state of the engine 3 or the electric motor 4.

Further, in the propulsion system 2 of the present embodiment, the controller 9 determines whether to stop the operation of the first engine 3a or the second engine 3b based on at least one of the load and the rotation speed of each of the first engine 3a and the second engine 3b and each of the first electric motor 4a and the second electric motor 4b.

As a result, the number of engines 3 to be operated can be more appropriately determined in accordance with an operating state of the engine 3 or the electric motor 4.

Furthermore, in the propulsion system 2 of the present embodiment includes the error detection unit (engine state detection unit 90) that detects errors of the first engine 3a and the second engine 3b.

As a result, when an error occurs in the engine 3, the engine 3 can be automatically stopped.

Additionally, in the propulsion system 2 of the present embodiment, the engine state detection unit 90 is configured so as to detect at least one of the engine oil pressure, the rotation speed, and the engine temperature of the first engine 3a and the second engine 3b.

As a result, an error of the engine can be easily detected.

Next, a second embodiment of the present invention will be described.

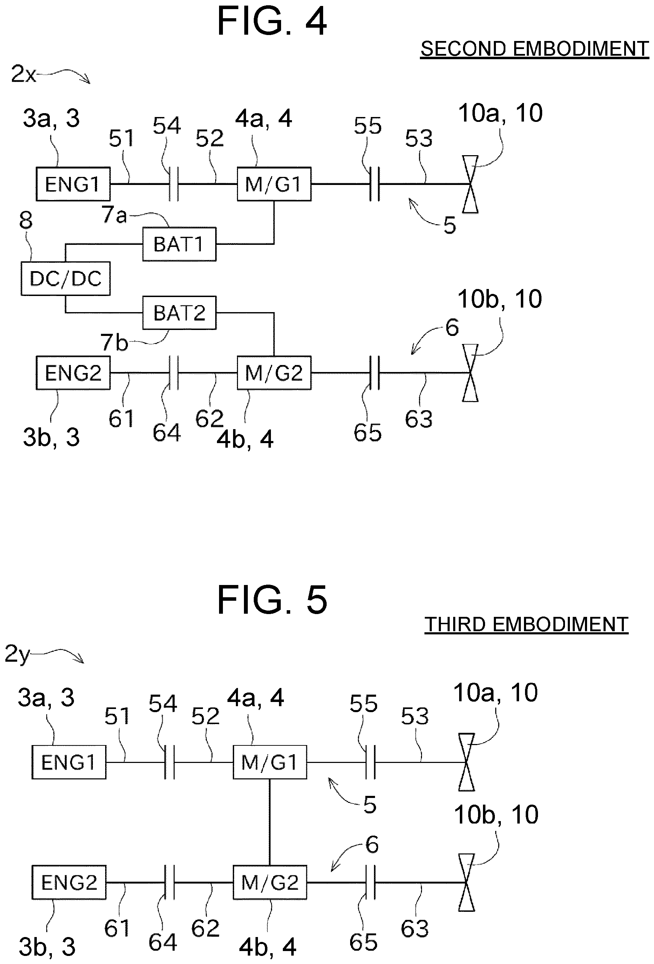

FIG. 4 is a schematic diagram illustrating a configuration of a propulsion system 2x of the second embodiment. Note that in the description of the present embodiment, the same or similar components as those of the aforementioned embodiment are assigned with the same numbers in the drawing, and descriptions thereof may be omitted.

As illustrated in FIG. 4, instead of the battery 7, a first battery 7a, a second battery 7b, and a DC/DC converter 8 are provided in the propulsion system 2x of the present embodiment. The first electric motor 4a and the second electric motor 4b are not directly connected, but are indirectly connected via the first battery 7a, the DC/DC converter 8, and the second battery 7b.

The first battery 7a is electrically connected to the first electric motor 4a so as to be directly charged by the first electric motor 4a.

The second battery 7b is electrically connected to the second electric motor 4b so as to be directly charged by the second electric motor 4b.

The DC/DC converter 8 is configured as a bi-directional DC/DC converter provided between the first battery 7a and the second battery 7b. The DC/DC converter 8 is used to switch the first battery 7a (the second battery 7b) between charging by the second battery 7b (the first battery 7a) and discharging to the second battery 7b (the first battery 7a).

This configuration allows the first battery 7a to be charged by electric power from the second battery 7b. In other words, the first battery 7a can be charged indirectly by the second electric motor 4b.

In the same way as described above, the second battery 7b can be charged by electric power from the first battery 7a. In other words, the second battery 7b can be charged indirectly by the first electric motor 4a.

With this configuration, in the fuel-efficient propulsion mode in which the first engine 3a is stopped, the first electric motor 4a is rotatably driven by the electric power from the first battery 7a. When the electric power of the first battery 7a is decreased, the first battery 7a is charged by the electric power from the second battery 7b (furthermore, electric power generated by the second electric motor 4b).

Likewise, in the fuel-efficient propulsion mode in which the second engine 3b is stopped, the second electric motor 4b is rotatably driven by the electric power from the second battery 7b. When the electric power of the second battery 7b is decreased, the second battery 7b is charged by the electric power from the first battery 7a (furthermore, electric power generated by the first electric motor 4a).

In other words, in the same way as the first embodiment described above, the single engine 3 can provide power directly or indirectly to each of the plurality of propellers 10, and thus fuel consumption during low-speed navigation can be reduced and straight traveling performance can be maintained at the time of breaking down of a part of the engines 3.

Next, a third embodiment of the present invention will be described. FIG. 5 is a schematic diagram illustrating a configuration of a propulsion system 2y of the third embodiment. Note that in the description of the present embodiment, the same or similar components as those of the aforementioned embodiment are assigned with the same numbers in the drawing, and descriptions thereof may be omitted.

In the propulsion system 2y of the present embodiment, the first electric motor 4a and the second electric motor 4b are directly connected without the battery 7. In other words, in the fuel-efficient propulsion mode, when the first engine 3a is stopped, the second electric motor 4b functions as a generator and drives the first electric motor 4a to rotate with the generated electric power. When the second engine 3b is stopped, the first electric motor 4a functions as a generator and drives the second electric motor 4b to rotate with the generated electric power.

In other words, in the same way as the first embodiment and the second embodiment described above, the single engine 3 can provide power directly or indirectly to each of the plurality of propellers 10, and thus fuel consumption during low-speed navigation can be reduced and straight traveling performance can be maintained at the time of breaking down of a part of the engines 3.

The preferred embodiments of the present invention are described above; however, the above configurations can be modified as follows.

The battery 7 (the first battery 7a and the second battery 7b) may be configured to be rechargeable at port.

The controller 9 may use the load and/or the rotation speed of the engine 3 and/or the electric motor 4 in addition to the navigation speed of the ship 1 to determine whether to switch to the fuel-efficient propulsion mode.

### DESCRIPTION OF REFERENCE NUMERALS

1 Ship
10a First propeller (first propulsion device)
10b Second propeller (second propulsion device)
2 Propulsion system
3a First engine
3b Second engine
4a First electric motor
4b Second electric motor
5 First power transmission path
54 First clutch
55 Second clutch
6 Second power transmission path
64 Third clutch
65 Fourth clutch

## Claims

1. A propulsion system mounted in a ship including at least a first propulsion device and a second propulsion device, the propulsion system comprising:
a first engine provided to directly drive the first propulsion device;
a second engine provided to directly drive the second propulsion device;
a first electric motor provided between the first engine and the first propulsion device; and
a second electric motor provided between the second engine and the second propulsion device,
wherein when the first engine is stopped, the first propulsion device is driven by the first electric motor rotating with electric power generated by the second electric motor.

2. The propulsion system according to claim 1, comprising:
a first power transmission path that connects the first engine and the first propulsion device and is provided with the first electric motor in the middle;
a second power transmission path that connects the second engine and the second propulsion device and is provided with the second electric motor in the middle;
a first clutch that switches between a first state in which the first power transmission path between the first engine and the first electric motor is connected and a second state in which the first power transmission path between the first engine and the first electric motor is disconnected;
a second clutch that switches between a first state in which the first power transmission path between the first electric motor and the first propulsion device is connected and a second state in which the first power transmission path between the first electric motor and the first propulsion device is disconnected;
a third clutch that switches between a first state in which the second power transmission path between the second engine and the second electric motor is connected and a second state in which the second power transmission path between the second engine and the second electric motor is disconnected;
a fourth clutch that switches between a first state in which the second power transmission path between the second electric motor and the second propulsion device is connected and a second state in which the second power transmission path between the second electric motor and the second propulsion device is disconnected; and
a controller that controls switching between the first state and the second state in each of the first clutch, the second clutch, the third clutch, and the fourth clutch,
wherein the first electric motor and the second electric motor are electrically connected to each other such that electric power generated by rotation of either one thereof can be supplied to the other, and
when the first engine is stopped, the controller switches the first clutch to the second state and switches the second clutch, the third clutch, and the fourth clutch to the first state, the first propulsion device is driven by the first electric motor rotating with electric power that is generated by the second electric motor with power from the second engine, and the second propulsion device is driven by the power from the second engine.

3. The propulsion system according to claim 1, wherein each of the first electric motor and the second electric motor is connected to an identical electrical storage device.

4. The propulsion system according to claim 2, wherein when a navigation speed of the ship is a predetermined speed or lower, the controller stops any of the first engine and the second engine, and the first propulsion device or the second propulsion device corresponding to the stopped first engine or the stopped second engine is driven by power, converted by the first electric motor and the second electric motor, of the second engine or the first engine that is not stopped.

5. The propulsion system according to claim 2, wherein the controller determines whether to stop an operation of the first engine or the second engine based on at least one of a load and a rotation speed of any of the first engine and the second engine and the first electric motor and the second electric motor.

6. The propulsion system according to claim 2, wherein the controller determines whether to stop an operation of the first engine or the second engine based on at least one of a load and a rotation speed of each of the first engine and the second engine and each of the first electric motor and the second electric motor.

7. The propulsion system according to claim 1, comprising an error detection unit that detects errors of the first engine and the second engine.

8. The propulsion system according to claim 7, wherein the error detection unit detects at least one of engine oil pressure, a rotation speed, and an engine temperature of the first engine and the second engine.
